# EUROPÄISCHE PATENTSCHRIFT

(11) **EP 0 482 039 B1**
(45) Veröffentlichungstag und Bekanntmachung des Hinweises auf die Patenterteilung: **27.04.1994**
(21) Anmeldenummer: 90910644.5
(22) Anmeldetag: 07.07.1990
(51) Int. Cl.: F16H 47/04, F16H 61/20

(54) **STUFENLOS VERSTELLBARE ANTRIEBSEINHEIT AN KRAFTFAHRZEUGEN**
CONTINUOUSLY VARIABLE DRIVING UNIT OF A MOTOR VEHICLE
UNITE DE TRANSMISSION A VARIATION CONTINUE SUR VEHICULES AUTOMOBILES

(30) Priorität: 14.07.1989 DE 3923225
(43) Veröffentlichungstag der Anmeldung: 29.04.1992
(73) Patentinhaber: ZF FRIEDRICHSHAFEN Aktiengesellschaft, 88038 Friedrichshafen (DE)
(72) Erfinder: NIKOLAUS, Heinrich, D-2000 Hamburg 70 (DE); PATON, Robert, D-8390 Passau (DE)
(86) Internationale Anmeldenummer: EP9001105
(87) Internationale Veröffentlichungsnummer: WO9101460

(56) Entgegenhaltungen:
- GB-A- 2 049 843
- US-A- 4 561 328
- US-A- 4 840 092

## Beschreibung

Die Erfindung betrifft eine stufenlos verstellbare Antriebseinheit mit den Merkmalen nach dem Oberbegriff des Anspruchs 1.

Aus der DE-C- 29 18 448 ist ein stufenlos einstellbares leistungsverzweigendes Getriebe bekannt, das aus zwei Teilgetrieben besteht. Das eine enthält einen stufenlos einstellbaren hydrostatischen und einen mechanischen Getriebezweig, die mit einem Koppelgetriebe mit mehreren Wellen ständig verbunden sind. Das andere Teilgetriebe ist ein Schaltgetriebe, das auf die Hauptabtriebswelle wirkt. Die Koppelwellen treiben alternativ das Schaltgetriebe an. Die Gangschaltungen erfolgen bei Synchrondrehzahlen lastfrei und ohne Zugkraft-Unterbrechungen. Das Getriebe wirkt wie ein stufenloses Getriebe mit großem Stellbereich und erlaubt einem Fahrzeug das Betreiben der Brennkraftmaschine entlang der Kurve für minimalen Kraftstoffverbrauch und ermöglicht so Kraftstoffeinsparung.

Im Anfahrpunkt ist der hydrostatische Getriebezweig auf maximales Fördervolumen eingestellt, und eine Kupplung verbindet die Koppelwelle für den ersten Vorwärts- oder Rückwärts-Fahrbereich mit der Hauptabtriebswelle bei Synchrondrehzahl Null, die sich aus der Summe der gegenläufigen Drehzahlen der Ausgangswellen des hydrostatischen Zweigs und der Welle des mechanischen Getriebezweigs ergibt. Bei Drehzahl Null der Koppelwellen des ersten Vorwärts- und des Rückwärts-Fahrbereichs erreicht die Koppelwelle des zweiten Vorwärts-Fahrbereichs ein Drehzahlmaximum. Wird das Fördervolumen zurückgenommen, verringert sich die Drehzahl der Ausgangswelle des hydrostatischen Zweigs und die Drehzahl der Koppelwelle des zweiten Fahrbereichs und erreicht Synchrondrehzahl mit der zunehmenden Drehzahl der Koppelwelle des ersten Fahrbereichs bei maximalem Volumen in umgekehrter Förderrichtung.

Da keine Anfahrkupplung vorgesehen ist, müssen zur Inbetriebnahme der Antriebseinheit die Brennkraftmaschine und das hydrostatisch-mechanische Teilgetriebe gemeinsam von einem Anlasser angetrieben werden. Die für den Antrieb des Teilgetriebes und der Brennkraftmaschine benötigte Leistung ist bestimmend für die Dimensionierung des Anlassers und des elektrischen Netzes des Kraftfahrzeugs.

Um den Gesamtwiderstand der Antriebseinheit niedrig zu halten, ist der Widerstand sowohl der Brennkraftmaschine als auch des Getriebes so gering wie möglich zu halten.

Hydrostatisch-mechanische Leistungsverzweigungs-Getriebe weisen bei großem Fördervolumen im hydrostatischen Zweig hohe Blindleistung auf. Das Fördervolumen ist bestimmt durch den Winkel der Schwenkscheibe der Primäreinheit. Die zum Antrieb benötige Leistung ist also unter anderem vom Winkel der Schwenkscheibe der Primäreinheit abhängig.

Zusätzlich resultiert Widerstand aus der Schleppwirkung in den geöffneten Kupplungen zwischen den drehenden Koppelwellen und der Abtriebswelle. Da unabhängig vom Fördervolumen im hydrostatischen Getriebezweig die Summe der Drehzahlen aller Koppelwellen größer Null ist, steht den Elementen der Schaltkupplung, z. B. Lamellen, ein Schleppwiderstand aus Reibung und Viskosität entgegen. Bei niedrigen Temperaturen erhöht sich der Schleppwiderstand, da die Schmierfähigkeit des Getriebeöls gering ist bei erhöhter Viskosität.

Aus der Schleppwirkung kann selbst bei ganz geöffneten Kupplungen die Abtriebswelle des Getriebes angetrieben werden und das Fahrzeug unkontrolliert in Bewegung setzen.

Aus meß- und regeltechnischen Gründen ist genaues andauerndes Einhalten einer Drehzahl der Koppelwellen nicht gewährleistet. Bei geschlossener Kupplung zwischen Hauptabtriebswelle und einer Koppelwelle, die auf Drehzahl Null gestellt sein sollte, bleibt daher das Kraftfahrzeug nicht sicher stehen, sondern kann sich unerwünscht bewegen.

Die der Erfindung zugrunde liegende Aufgabe besteht darin, ein stufenloses Leistungsverzweigungs-Getriebe zu schaffen, das während der Inbetriebnahme der Antriebseinheit eine geringen Widerstand aufweist, wobei ferner im Stillstand bei laufendem Motor oder während einer Warmlaufphase ein unbeabsichtigtes Bewegen des Kraftfahrzeugs ausgeschlossen ist.

Erfindungsgemäß wird dies dadurch erreicht, daß während eines Anlaßvorgangs das Fördervolumen im hydrostatischen Zweig auf ein Minimum geregelt ist und nach Inbetriebnahme der Antriebseinheit mindestens zwei schaltbare Elemente mit der Getriebe-Ausgangswelle verbunden werden.

Durch die erfindungsgemäße Einrichtung wird zudem der Vorteil erreicht, daß ein Anlasser mit geringer Leistung zur Inbetriebnahme der Antriebseinheit ausreicht, wodurch Kosten im gesamten elektrischen Netz des Kraftfahrzeugs reduziert werden können. Die Verstellung der Schwenkscheibe der Hydrostat-Einheit von minimalem zu maximalem Fördervolumen ermöglicht das Schließen der Schaltkupplungen, unmittelbar nachdem der Anlasser nicht mehr betätigt wird und verkürzt die Warmlaufphase. Bei großem Fördervolumen im hydrostatischen Zweig wird mehr Öl bewegt und dadurch rascher erwärmt, wodurch die Schmierfähigkeit schneller erhöht und die Ölzähigkeit reduziert wierd. Bei geschlossener Kupplung des ersten Vorwärts- und geschlossener Bremse des ersten Rückwärts-Fahrbereichs ist, unabhängig von den meß- und regeltechnisch bedingten Abweichungen von der Null-Drehzahl in den Koppelwellen, die Getriebe-Ausgangswelle auf Drehzahl Null festgesetzt.

Weitere vorteilhafte Merkmale und bauliche Ausgestaltungen des Gegenstands nach dem Hauptanspruch sind den Unteransprüchen 2 bis 5 zu entnehmen.

In den Zeichnungen sind Ausführungsbeispiele der Erfindung dargestellt.
- Fig. 1:: schematische Darstellung einer ersten Getriebeversion;
- Fig. 2:: schematische Darstellung einer zweiten Getriebeversion.

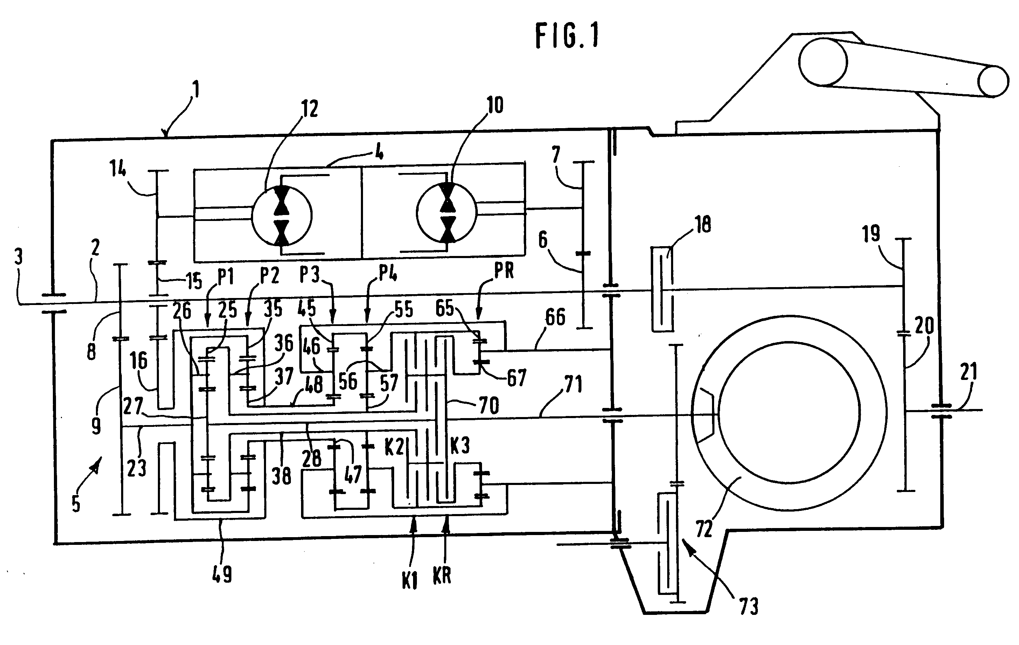

Gemäß Fig. 1 ist in einem Gehäuse 1 eine Eingangswelle 2 gelagert, die eingangsseitig bei 3 mit einer nicht dargestellten Brennkraftmaschine gekuppelt ist. Achsparallel zur Eingangswelle 2 sind ein hydrostatischer Leistungszweig 4 und ein mechanischer Leistungszweig 5 innerhalb des Gehäuses 1 angeordnet. Zum Antrieb des hydrostatischen Leistungszweiges 4 ist ein Zahnrad 6 mit der Eingangswelle 2 verbunden und kämmt mit einem Zahnrad 7. Ein Zahnrad 8, das mit der Eingangswelle 2 verbunden ist, und mit dem Zahnrad 9 kämmt, treibt den mechanischen Leistungszweig 5 an.

Der hydrostatische Leistungszweig 4 besteht aus einer primären hydrostatischen Maschine 10, insbesondere einer Axialkolbenmaschine, deren Schluck- bzw. Fördervolumen kontinuierlich veränderbar ist, wobei der Schwenkwinkel des Verstellgliedes von Null aus in negativer und positiver Richtung einstellbar ist. Die Maschine 10 ist hydraulisch mit einer sekundären hydrostatischen Maschine 12 verbunden. Diese Maschine 12 weist ein konstantes Schluck- bzw. Fördervolumen auf und ist z. B. als Axialkolbenmaschine ausgebildet. Die Maschine 12 ist über Zahnräder 14, 15, 16 mit dem mechanischen Leistungszweig 5 verbunden.

Die Eingangswelle 2 ist abtriebsseitig verlängert und über eine Schaltkupplung 18 und Zahnräder 19 und 20 mit einer Zapfwelle 21 verbunden. Die Zapfwelle 21 dient bei landwirtschaflichen und anderen Arbeitsmaschinen zum Antrieb zusätzlicher Einrichtungen.

Der hydrostatische und der mechanische Leistungszweig 4, 5 werden in fünf Planetensätzen P1 bis P4 und PR zusammengeführt, an die Kupplungen K1 bis K3 und KR des Schaltgetriebes anschließen.

Der Steg 26 des ersten Planetensatzes P1 und das Hohlrad 35 des zweiten Planetensatzes P2 bilden mit einer Zwischenwelle 23 und dem Zahnrad 9 der Eingangswelle 2 den mechanischen Leistungszweig 5.

Das Hohlrad 25 des ersten Planetensatzes P1 und der Steg 36 des zweiten Planetensatzes P2 sind miteinander und über eine Hohlwelle 38 mit dem Sonnenrad 57 des vierten Planetensatzes P4 und mit der Kupplung K2 verbunden. Das Sonnenrad 27 des ersten Planetensatzes P1 ist über eine zentrische Welle 28 mit der Kupplung K3 verbunden. Das Sonnenrad 37 des zweiten Planetensatzes P2 ist über eine Hohlwelle 48 mit dem Sonnenrad 47 des dritten Planetensatzes P3 verbunden. Außerdem ist die Hohlwelle 48 über eine Antriebsglocke 49, welche die Planetensätze P1 und P2 übergreift, mit dem Zahnrad 16 verbunden, das an den hydrostatischen Leistungszweig 4 angeschlossen ist.

Der Steg 46 des dritten Planetensatzes P3 ist gehäusefest angeordnet. Der Steg 56 des vierten Planetensatzes P4 ist mit der Kupplung K1 und mit dem Hohlrad 65 des fünften Planetensatzes PR verbunden. Die Hohlräder 45 und 55 der Planetensätze P3 und P4 sind miteinander verbunden.

Der Steg 66 des fünften Planetensatzes PR ist gehäusefest angeordnet, während das Sonnenrad 67 über die Kupplung KR mit dem Lamellenträger 70 verbunden werden kann. Die Drehrichtung des Sonnenrades 67 ist entgegengesetzt zum Steg 56.

Abtriebsseitig weisen alle Kupplungen einen gemeinsamen Lamellenträger 70 auf, der mit der Ausgangswelle 71 verbunden ist, die ein Achsdifferential 72 einer Hinterachse antreibt. Gegebenenfalls kann über eine Kupplung 73 ein weiteres nicht dargestelltes Vorderachsdifferential zugeschaltet werden.

Der erste und zweite Planetensatz P1 und P2 bilden ein Summierungsgetriebe mit einem Eingang von der Eingangswelle 2 und mit einem Eingang vom hydrostatischen Leistungszweig 4. Die Planetensätze P3 und P4 bilden ebenfalls ein Summierungsgetriebe. Der Planetensatz PR dient zur Drehzahlumkehr beim Rückwärtsfahren des Fahrzeuges. Über die Kupplungen ist die Ausgangswelle 71 mit den Planetensätzen verbindbar. Bei vorgegebener Getriebegeometrie, Endgeschwindigkeit und Spreizung der Fahrbereiche sind zwei Summierungsgetriebe nötig, um Drehzahl Null an einer der Koppelwellen zu erreichen. Die Planetensätze P1 bis P4, die Kupplungen K1 bis K3 und KR sowie der Planetensatz PR sind in der angegebenen Reihenfolge axial nebeneinander angeordnet. Achsparallel sind hierzu die Eingangswelle 2 und die beiden Maschinen des hydrostatischen Leistungszweiges 4 im Gehäuse 1 angeordnet.

Bei Stillstand der Antriebseinheit ist die Primäreinheit 10 im hydrostatischen Zweig 4 des Leistungsverzweigungs-Getriebes auf Fördervolumen Null gestellt. Während des Betriebs der Brennkraftmaschine durch einen Anlasser (nicht dargestellt) bleibt die Schwenkscheibe der Primäreinheit 10 in dieser Stellung. Bei laufender Brennkraftmaschine ohne Fremdkrafthilfe durch den Anlasser und Stillstand des Kraftfahrzeugs werden Kupplung K1 und KR geschlossen, nachdem die Primäreinheit 10 auf maximales Fördervolumen verstellt wurde. Die Getriebeausgangswelle 71 ist blockiert, da eine Drehbewegung des Stegs 56 den Lamellenträger 70 in entgegengesetzte Drehrichtungen beaufschlagt.

Zum Vorwärtsfahren wird KR gelöst und die Maschine 10, ausgehend von der maximalen Verstellung, zurückgeschwenkt.

Für den Rückwärtsgang R wird ausgehend vom Stillstand die Kupplung K1 gelöst, und KR bleibt eingerückt. Der Leistungsfluß erfolgt über die Planetensätze P2, P3, P4 und PR auf die Ausgangswelle 71.

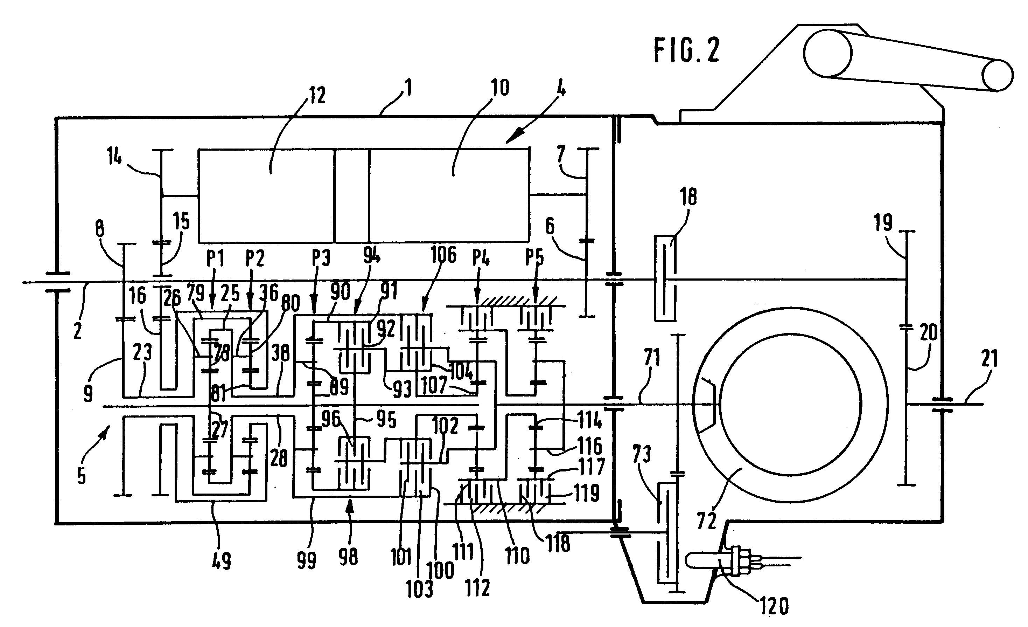

Die Getriebeversion gemäß Fig. 2 unterscheidet sich von dem oben beschriebenen Getriebe im Koppel- und im mechanischen Schaltgetriebe. Die Numerierung entsprechender Bauteile ist wie die der Getriebeversion 1.

Das Koppelgetriebe enthält zwei dreiwellige Planetenradsätze P1 und P2. Die Eingangswelle 23 des mechanischen Leistungszweigs 5 ist mit einem Planetenträger 26 des Planetenradsatzes P1 verbunden. Der Planetenradsatz P1 enthält Planeten 78. Die Eingangswelle 23 ist fest mit einem Hohlrad 79 des zweiten Planetenradsatzes P2 verbunden. Der Planetenradsatz P2 enthält Planeten 80. Die Eingangswelle 16 ist fest mit einem Sonnenrad 81 des zweiten Planetenradsatzes P2 verbunden. Eine Sonne 27 des ersten Planetenradsatzes P1 ist befestigt auf einer Koppelwelle 28. Ein Planetenradträger 36 des zweiten Planetenradsatzes P2 ist mit einem Hohlrad 25 des Planetenradsatzes P1 und einer Koppelwelle 38 verbunden. Die Koppelwellen 28 und 38 sind mit einem zweiten Koppelgetriebe verbunden, das einen Planetenradsatz P3 aufweist. Eine Sonne 87 dieses Planetenradsatzes P3 ist mit der Sonne 27 des ersten Planetenradsatzes P1, und der Planetenradträger 36 des zweiten Planetenradsatzes P2 ist mit einem Planetenradträger 89 des Planetenradsatzes P3 über die Koppelwelle 38 verbunden.

An einem Hohlrad 90 des Planetenradsatzes P3 sind Außenlamellen 91 einer Kupplung 94 drehfest angebracht. Diese Außenlamellen 91 greifen zwischen Innenlamellen 92, die auf einer Welle 93 drehfest sind.

Auf der Koppelwelle 28 ist ein Kupplungsträger 95 montiert, der über drehfeste Außenlamellen 96 zwischen die auf der Welle 93 drehfest montierten Innenlamellen 92 einer Kupplung 98 eingreift.

An einer mit der Koppelwelle 38 fest verbundenen Zwischenwelle 99 sind Außenlamellen 100 einer Kupplung 103 drehfest montiert. Diese greifen zwischen Innenlamellen 101, die auf einer Welle 102 drehfest angebracht sind.

Die Welle 93 enthält drehfeste Außenlamellen 104, die zwischen Innenlamellen 101 einer Kupplung 106 greifen.

Die Welle 93 ist fest mit einer Sonne 107 eines Planetenradsatzes P4 verbunden. Die Welle 102 trägt Planeten 109 des Planetenradsatzes P4. Ein Hohlrad 110 des Planetenradsatzes P4 ist über Lamellen 111 einer Bremse 112 mit dem Getriebegehäuse 1 verbindbar. Die Welle 102 ist fest mit einer Getriebe-Ausgangswelle 71 verbunden. Das Hohlrad 110 des Planetenradsatzes P4 ist fest mit einer Sonne 114 eines Planetenradsatzes P5 verbunden. Ein Planetenradträger 116 des Planetenradsatzes P5 ist fest mit der Getriebe-Ausgangswelle 71 verbunden. Ein Hohlrad 117 des Planetenradsatzes P5 kann über Lamellen 118 einer Bremse 119 mit dem Getriebegehäuse 1 verbunden werden.

Funktionsweise:
Bei Stillstand der Antriebseinheit ist die Maschine 10 im hydrostatischen Zweig 4 des Leistungsverzweigungs-Getriebes 1 auf Fördervolumen Null gestellt. Während des Betriebs der Brennkraftmaschine durch einen Anlasser (nicht dargestellt) bleibt die Maschine 10 in dieser Stellung.

Die Maschine 10 und die Eingangswelle 2 werden proportional zur Drehzahl der Brennkraftmaschine angetrieben. Läuft die Brennkraftmaschine ohne Fremdkraft durch den Anlasser, wird durch Verstellen des Fördervolumens der Maschine 10 die Maschine 12 beschleunigt und das Hohlrad 90 des Planetenradsatzes P3 durch Summieren der Drehzahlen der Eingangswellen 16, 23 in den Planetenradsätzen P1, P2 und P3 auf Drehzahl Null gebracht.

Um die Getriebe-Ausgangswelle 71 zu blockieren, werden die Bremsen 112, 119 gemeinsam geschlossen. Die Bremsen 112, 119 können unabhängig vom Fördervolumen in der Maschine 10 und der Drehzahl des Hohlrads 90 geschlossen werden, da die Planetenradsätze P4 und P5 durch Kupplungen 94, 98, 103, 106 von den Koppelgetrieben P1, P2 und P3 trennbar sind.

Um loszufahren, schließt die Kupplung 94. Wird die Bremse 119 geöffnet, ist der erste Vorwärts-Fahrbereich eingeschaltet. Bleibt die Bremse 119 geschlossen und Bremse 112 wird geöffnet, ist der erste Rückwärts-Fahrbereich eingeschaltet.

An einer zur Messung der Öltemperatur im Getriebe geeigneten Stelle ist ein Temperatursensor 120 angebracht, der mit einer Regeleinrichtung (nicht dargestellt) des Getriebes verbunden ist. Bei niedrigen Öltemperaturen kann dieser Sensor 120 ein Signal an eine akustische oder optische Warneinrichtung am Fahrschalter (nicht dargestellt) geben und/oder die Regeleinrichtung so steuern, daß nur ein eingeschränkter oder kein Fahrbetrieb möglich ist, bis das Öl eine Mindesttemperatur überschritten hat.

### Bezugszeichen

- 1: Gehäuse
- 2: Eingangswelle
- 4: hydrostatischer Leistungszweig
- 5: mechanischer Leistungszweig
- 6: Zahnrad
- 7: Zahnrad
- 8: Zahnrad
- 9: Zahnrad
- 10: hydrostatische Maschine
- 12: hydrostatische Maschine
- 14: Zahnrad
- 15: Zahnrad
- 16: Zahnrad
- 18: Schaltkupplung
- 19: Zahnrad
- 20: Zahnrad
- 21: Zapfwelle
- P1: Planetenradsatz
- P2: Planetenradsatz
- P3: Planetenradsatz
- P4: Planetenradsatz
- PR: Planetenradsatz
- K1: Kupplung
- K2: Kupplung
- K3: Kupplung
- KR: Kupplung
- 23: Zwischenwelle
- 26: Steg
- 27: Sonnenrad
- 28: Welle
- 35: Hohlrad
- 36: Steg
- 37: Sonnenrad
- 38: Hohlwelle
- 45: Hohlrad
- 46: Steg
- 47: Sonnenrad
- 48: Hohlwelle
- 49: Antriebsglocke
- 55: Hohlrad
- 56: Steg
- 66: Steg
- 67: Sonnenrad
- 70: Lamellenträger
- 71: Ausgangswelle
- 72: Achsdifferential
- 73: Kupplung
- 78: Planeten
- 79: Hohlrad
- 80: Planeten
- 81: Sonnenrad
- 87: Sonne
- 89: Planetenradträger
- 90: Hohlrad
- 91: Außenlamellen
- 92: Innenlamellen
- 93: Welle
- 94: Kupplung
- 95: Kupplungsträger
- 96: Außenlamellen
- 98: Kupplung
- 99: Zwischenwelle
- 100: Außenlamellen
- 101: Innenlamellen
- 102: Welle
- 103: Kupplung
- 104: Außenlamellen
- 106: Kupplung
- 107: Sonne
- 110: Hohlrad
- 111: Lamellen
- 112: Bremse
- 114: Sonne
- 116: Planetenträger
- 117: Hohlrad
- 118: Lamellen
- 119: Bremse
- 120: Temperatursensor

## Patentansprüche

1. Stufenlos verstellbare Antriebseinheit mit Leistungsverzweigung für Kraftfahrzeuge, insbesondere Traktoren und andere Arbeitsmaschinen,
- bei der von einer Eingangswelle (2) über Vorgelege ein hydrostatischer Leistungszweig (4) und ein mechanischer Leistungszweig (5) angetrieben sind,
- bei der der hydrostatische Leistungszweig (4) eine stetig verstellbase primäre hydrostatische Maschine (10) und eine sekundäre hydrostatische Maschine (12) aufweist,
- bei der der hydrostatische und der mechanische Leistungszweig (4, 5) in Koppelgetrieben in Planetenbauweis zusammengeführt sind und
- bei maximalem Fördervolumen im hydrostatischen Zweig (4) die Summe der Drehzahlen aus mechanischem und hydrostatischem Getriebezweig (4, 5) an einer der Ausgangswellen des Koppelgetriebes (56, 90) die Drehzahl Null ergibt,
dadurch **gekennzeichnet,** daß während eines Anlaßvorgangs das Fördervolumen im hydrostatischen Zweig (4) auf ein Minimum geregelt ist, und nach Inbetriebnahme der Antriebseinheit Schaltelemente für zwei Fahrbereiche mit der Getriebe-Ausgangswelle (71) verbunden werden.

2. Antriebseinheit gemäß Anspruch 1, dadurch **gekennzeichnet,** daß im Stillstand des Kraftfahrzeugs Kupplungen (K1, KR) die Getriebeausgangswelle (71) mit einer Koppelwelle (56) verbinden.

3. Antriebseinheit gemäß Anspruch 1, dadurch **gekennzeichnet,** daß die schaltbaren Elemente Bremsen (112, 119) sind, die die Getriebeausgangswelle (71) mit dem Getriebegehäuse verbinden.

4. Antriebseinheit gemäß Anspruch 1, dadurch **gekennzeichnet,** daß nach Inbetriebnahme der Antriebseinheit das Fördervolumen der primären Maschine (10) im hydrostatischen Zweig (4) vergrößert wird.

5. Antriebseinheit gemäß Anspruch 1, dadurch **gekennzeichnet,** daß ein Sensor (120) die Temperatur des Getriebeöls mißt und die Getriebe-Ausgangswelle (71) so lange mit den schaltbaren Elementen verbunden bleibt, bis die Getriebeöl-Temperatur eine Mindesttemperatur überschritten hat.

## Claims

1. The present invention concerns a continuously variable driving unit of a motor vehicle with power-split function, in particular for tractors and other off-road equipment,
- in which a hydrostatic power branch (4) and a mechanical power branch (5) are driven off an input shaft (2) through an idler,
- in which the hydrostatic power branch (4) demonstrates a continuously variable primary hydrostatic motor (10) and a secondary hydrostatic motor (12),
- in which the hydrostatic and the mechanical power branches (4, 5) are brought together in planetary coupling gears, and
- in which when the delivery volume in the hydrostatic branch (4) is at its maximum level, the summation of the rotational speeds of the hydrostatic and mechanical gearbox branches (4, 5) produces a zero rotational speed on one of the output shafts from the coupling transmission (56, 90),
**characterized** in that,
during starting, the delivery volume in the hydrostatic branch (4) is set to a minimum level, and when the drive unit begins operation, shift elements of the two drive ranges are connected to the gearbox output shaft (71).

2. Driving unit in accordance with Claim 1,
**characterized** in that,
when the vehicle is stationary, clutches (K1, KR) connect the gearbox output shaft (71) to a coupling shaft (56).

3. Driving unit in accordance with Claim 1,
**characterized** in that,
the shiftable elements are brakes (112, 119) which connect the gearbox output shaft (71) to the gearbox housing.

4. Driving unit in accordance with Claim 1,
**characterized** in that,
when the driving unit begins to operate, the delivery volume of the primary motor (10) in the hydrostatic branch (4) is increased.

5. Driving unit in accordance with Claim 1,
**characterized** in that,
a sensor (120) measures the temperature of the gearbox oil, and the gearbox output shaft (71) remains connected to the shiftable elements until the gearbox oil temperature has exceeded a minimum temperature level.

## Revendications

1. Unité d'entraînement à régulation progressive avec dérivation de puissance pour véhicules automobiles, en particulier pour des tracteurs et autres machines de travail,
- sur laquelle une chaîne de dérivation de puissance hydrostatique (4) et une chaîne de dérivation de puissance mécanique (5) sont entraînées par un arbre d'entrée (2) par l'intermédiaire d'un renvoi,
- sur laquelle la chaîne de dérivation de puissance hydrostatique (4) présente une machine hydrostatique primaire réglable en continu (10) et une machine hydrostatique secondaire (12),
- sur laquelle les chaînes de dérivation de puissance hydrostatique et mécanique (4, 5) sont réunies dans des boîtes d'accouplement à groupe planétaire et,
- avec le débit maximal dans la chaîne de dérivation hydrostatique (4), la somme des régimes des chaînes de dérivation de boîte mécanique et hydrostatique (4, 5) à l'un des arbres de sortie de la boîte d'accouplement (56, 90) est égale à un régime "zéro",
**caractérisée** en ce que,
lors d'un processus de démarrage, le débit dans la chaîne de dérivation hydrostatique (4) est réglé à un minimum et que, après la mise en service de l'unité d'entraînement, des éléments de commande pour deux gammes de vitesses sont reliés à l'arbre de sortie de la boîte (71).

2. Unité d'entraînement selon la revendication 1,
**caractérisée** en ce que,
lorsque le véhicule est immobilisé, des embrayages (K1, KR) relient l'arbre de sortie de la boîte (71) à un arbre d'accouplement (56).

3. Unité d'entraînement selon la revendication 1,
**caractérisée** en ce que
les éléments commutables sont des freins (112, 119) qui relient l'arbre de sortie de la boîte (71) au carter de la boîte.

4. Unité d'entraînement selon la revendication 1,
**caractérisée** en ce que,
après la mise en service de l'unité d'entraînement, le débit de la machine primaire (10) est augmenté dans la chaîne de dérivation hydrostatique (4).

5. Unité d'entraînement selon la revendication 1,
**caractérisée** en ce qu'un capteur (120) mesure la température de l'huile de la boîte et que l'arbre de sortie de la boîte (71) reste relié aux éléments commutables jusqu'à ce que la température de l'huile de la boîte ait dépassé une valeur minimale.
